# EUROPEAN PATENT SPECIFICATION

(11) **EP 3 975 476 B1**
(45) Date of publication and mention of the grant of the patent: **03.07.2024**
(21) Application number: 21198933.0
(22) Date of filing: 24.09.2021
(51) Int. Cl.: H04L 9/40, H04L 67/104, G06F 21/64, H04W 12/121, H04L 41/5054, H04W 4/50

(54) **TRUST-BASED ORCHESTRATION OF AN EDGE NODE**
VERTRAUENSBASIERTE ORCHESTRIERUNG EINES RANDKNOTENS
ORCHESTRATION D'UN NOEUD DE BORDURE BASÉE SUR LA CONFIANCE

(30) Priority: 26.09.2020 US 202017033757
(43) Date of publication of application: 30.03.2022
(73) Proprietor: Intel Corporation, Santa Clara, CA 95054 (US)
(72) Inventor: SMITH, Ned M., Beaverton, AZ 97006 (US); DOSHI, Kshitij Arun, Tempe, AZ 85282 (US); GUIM BERNAT, Francesc, 08036 Barcelona (ES); POORNACHANDRAN, Rajesh, Portland, OR 97229 (US); SOOD, Kapli, Portland, OR 97229 (US); VISWANATHAN, Tarun, El Dorado Hills, OR 95762 (US)
(74) Representative: Maiwald GmbH

(56) References cited:
- US-A1- 2019 140 919
- US-A1- 2020 007 414
- WU BO ET AL: "Toward Blockchain-Powered Trusted Collaborative Services for Edge-Centric Networks", IEEE NETWORK, IEEE SERVICE CENTER, NEW YORK, NY, US, vol. 34, no. 2, March 2020 (2020-03), pages 30-36, XP011781701, ISSN: 0890-8044, DOI: 10.1109/MNET.001.1900153 [retrieved on 2020-04-02]

## Description

### BACKGROUND

Edge computing, at a general level, refers to the implementation, coordination, and use of computing and resources at locations closer to the "edge" or collection of "edges" of the network. The purpose of this arrangement is to improve total cost of ownership, reduce application and network latency, reduce network backhaul traffic and associated energy consumption, improve service capabilities, and improve compliance with security or data privacy requirements (especially as compared to conventional cloud computing). Components that can perform edge computing operations ("edge nodes") can reside in whatever location needed by the system architecture or ad hoc service (e.g., in an high performance compute data center or cloud installation; a designated edge node server, an enterprise server, a roadside server, a telecom central office; or a local or peer at-the-edge device being served consuming edge services).

Applications that have been adapted for edge computing include but are not limited to virtualization of traditional network functions (e.g., to operate telecommunications or Internet services) and the introduction of next-generation features and services (e.g., to support 5G network services). Use-cases which are projected to extensively utilize edge computing include connected self-driving cars, surveillance, Internet of Things (IoT) device data analytics, video encoding and analytics, location aware services, device sensing in Smart Cities, among many other network and compute intensive services.

Edge computing may, in some scenarios, offer or host a cloud-like distributed service, to offer orchestration and management for applications and coordinated service instances among many types of storage and compute resources. Edge computing is also expected to be closely integrated with existing use cases and technology developed for IoT and Fog/distributed networking configurations, as endpoint devices, clients, and gateways attempt to access network resources and applications at locations closer to the edge of the network.

US 2019/140 919 A1 discloses an architecture to enable verification, ranking, and identification of respective edge service properties and associated service level agreement (SLA) properties, such as in an edge cloud or other edge computing environment.

(Wu et al., "Towards Blockchain-Powered Trusted Collaborative Services for Edge-Centric Networks", IEEE Network 34 (2), 30-36, ISSN: 0890-8044, doi: 10.1109/MNET.001.1900153 (2020)) discloses the BlockEdge system that introduces incentive schemes to attract edge nodes to participate in collaborative edge computing tasks. The system then publicly and persistently stores all task results on blockchain to enable smart-contract-based correctness verification and automated punishment in case of failures.

US 2020/007 414 A1 discloses a system with a multi-access computing, MEC, edge orchestrator that is to receive a request for service that includes a workload from a user agent, and facilitate formation of a service level agreement, SLA, for servicing the workload. This formation includes obtaining bids from a plurality of service providers to respective serve a plurality of functions or tasks of the workload.

### SUMMARY OF THE INVENTION

The invention is defined by the appended claims. Embodiments and examples not covered by the claims are presented to illustrate, and facilitate the understanding of, the claimed invention.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 illustrates an overview of an edge cloud configuration for edge computing.
FIG. 2 illustrates operational layers among endpoints, an edge cloud, and cloud computing environments.
FIG. 3 illustrates an example approach for networking and services in an edge computing system.
FIG. 4 illustrates deployment of a virtual edge configuration in an edge computing system operated among multiple edge nodes and multiple tenants.
FIG. 5 illustrates various compute arrangements deploying containers in an edge computing system.
FIG. 6 illustrates a compute and communication use case involving mobile access to applications in an edge computing system.
FIG. 7A provides an overview of example components for compute deployed at a compute node in an edge computing system.
FIG. 7B provides a further overview of example components within a computing device in an edge computing system.
FIG. 8 is a diagram illustrating an operating environment, according to an embodiment.
FIG. 9 shows Edge Node equipment vendors supplying components of an Edge Node where each vendor produces a manifest describing the component produced, according to an embodiment.
FIG. 10 shows an Edge Node containing an Attester function that securely reports attestation Evidence to an Edge Trust Verifier, according to an embodiment.
FIG. 11 shows example claims that both an Edge Node and vendors of Edge Nodes may assert as properties of a manufactured and deployed Edge Node, according to an embodiment.
FIG. 12 shows an example reputation log that, for a particular instance of an Edge Node contains a history of events pertaining to the edge node that affect trustworthiness, according to an embodiment.
FIG. 13 shows an example reputation weighting scheme that assigns a weight to each of the entries in an reputation log such that the relative significance of the event with respect to the other events is determined, according to an embodiment.
FIG. 14 shows an ETV node collecting Reputation logs from a variety of Edge Nodes where Edge Nodes may have both similar and different sets of claims, according to an embodiment.
FIG. 15 shows an Edge network containing a blockchain network of Edge Nodes where at least some of the nodes are ETV nodes and where the ETV nodes compute reputation scores for the other Edge nodes in the Edge network, according to an embodiment.
FIG. 16 is a flowchart illustrating control and data flow, according to an embodiment.
FIG. 17 is a flow chart illustrating a method for trust-based orchestration in an edge computing environment, according to an embodiment.

### DETAILED DESCRIPTION

The following embodiments generally relate to orchestration among edge nodes. Orchestration among edge nodes is increasingly important to provide optimal workload performance and quality of service. Conventional orchestration models focus on orchestrating resources such as compute, cache, memory, network bandwidth, accelerators, input/output, and the like. In the present disclosure, orchestration is based on trust models. Instead of viewing the physical, software, and other resources of edge nodes, trust-based orchestration used defined trust factors for edge nodes or groups of edge nodes, to identify and assess risk factors and mitigate risk.

Attestation is used as a basis of trust in an operating environment. Attestation establishes trust in a device or component. Attestation may be achieved through device-level root of trust mechanisms, secure digital signatures, or by having other trusted devices attest to the trustworthiness of the device under test.

Risk assessment is dynamic, hence if any change is noted, then re-attestation is needed. Event driven attestation may be a runtime determination. Attestation may include identity brokering, where virtual identities can be dynamically created.

Attestation of physical edge node endpoints and identities may be dynamic to account for dynamic load balancing, service level agreements (SLA) changes, workload migrations, mobility of edge nodes, etc. Changes in an edge node location, configuration, and lifecycle events may trigger re-attestation. Service level agreements (SLA) tied to trust, may impact billing. For example, different trust levels may be defined according to differing degrees of protections in edge node hardware, firmware, and software as well as differences in physical location. These edge node changes and attestation can be used for regulatory purposes, administrating geo-location, or setting data sovereignty and security monitoring purposes.

This system may be used to augment existing platform Resource Director Technology (RDT) to have security attributes as a Class of Service (CLOS) that can be dynamically negotiated with apps in edge computing by leaning on platform Trusted Execution Environment (TEE). These and other details are described further below.

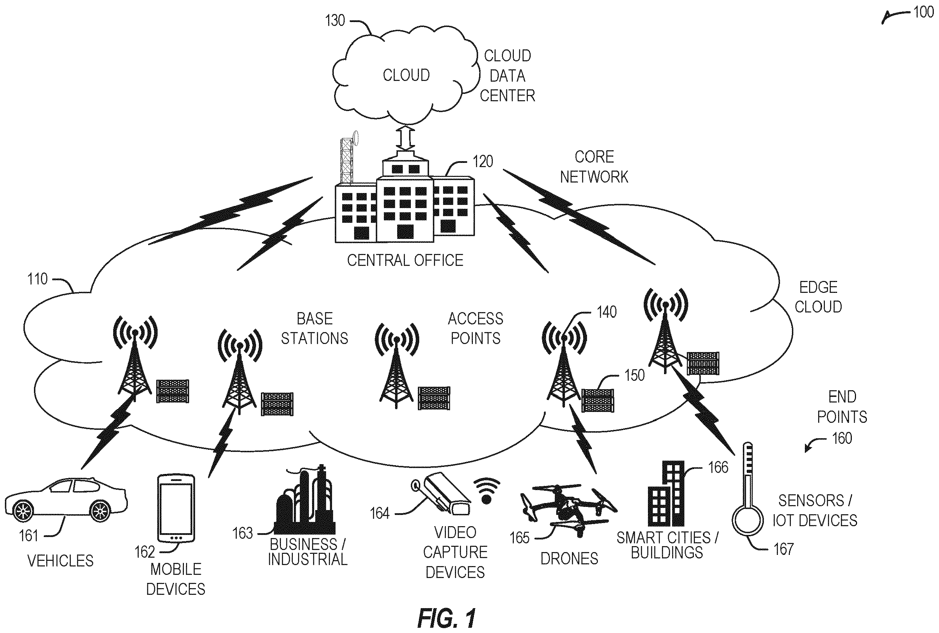

FIG. 1 is a block diagram 100 showing an overview of a configuration for edge computing, which includes a layer of processing referred to in many of the following examples as an "edge cloud". As shown, the edge cloud 110 is co-located at an edge location, such as an access point or base station 140, a local processing hub 150, or a central office 120, and thus may include multiple entities, devices, and equipment instances. The edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the edge cloud 110 are critical to providing ultra-low latency response times for services and functions used by the endpoint data sources 160 as well as reduce network backhaul traffic from the edge cloud 110 toward cloud data center 130 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

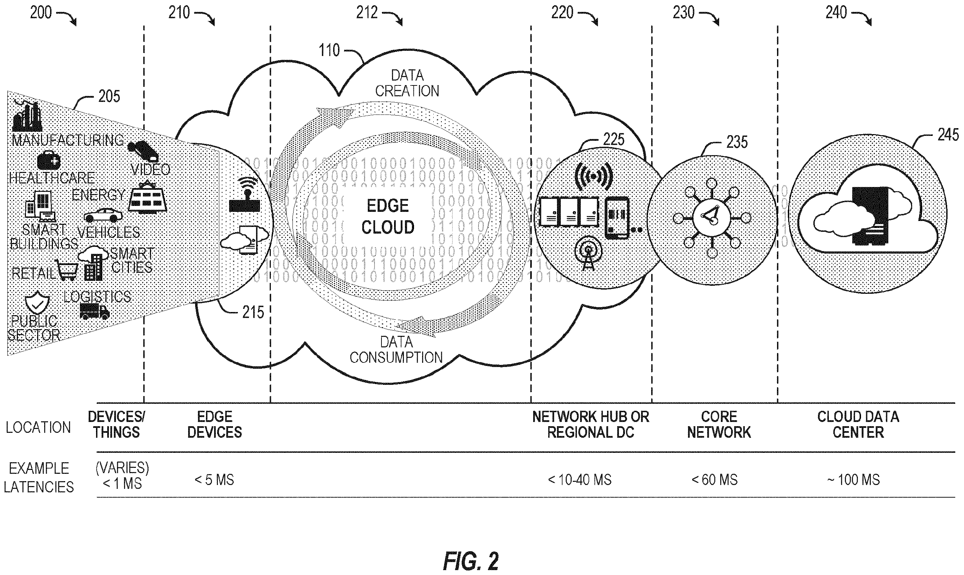

FIG. 2 illustrates operational layers among endpoints, an edge cloud, and cloud computing environments. Specifically, FIG. 2 depicts examples of computational use cases 205, utilizing the edge cloud 110 among multiple illustrative layers of network computing. The layers begin at an endpoint (devices and things) layer 200, which accesses the edge cloud 110 to conduct data creation, analysis, and data consumption activities. The edge cloud 110 may span multiple network layers, such as an edge devices layer 210 having gateways, on-premise servers, or network equipment (nodes 215) located in physically proximate edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the edge devices layer 210, to even between 10 to 40 ms when communicating with nodes at the network access layer 220. Beyond the edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 235 or a cloud data center 245, a central office or content data network may be considered as being located within a "near edge" layer ("near" to the cloud, having high latency values when communicating with the devices and endpoints of the use cases 205), whereas an access point, base station, on-premise server, or network gateway may be considered as located within a "far edge" layer ("far" from the cloud, having low latency values when communicating with the devices and endpoints of the use cases 205). It will be understood that other categorizations of a particular network layer as constituting a "close", "local", "near", "middle", or "far" edge may be based on latency, distance, number of network hops, or other measurable characteristics, as measured from a source in any of the network layers 200-240.

The various use cases 205 may access resources under usage pressure from incoming streams, due to multiple services utilizing the edge cloud. To achieve results with low latency, the services executed within the edge cloud 110 balance varying requirements in terms of (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 110 (network layers 200-240), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 110.

As such, the edge cloud 110 is formed from network components and functional features operated by and within edge gateway nodes, edge aggregation nodes, or other edge compute nodes among network layers 210-230. The edge cloud 110 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 110 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

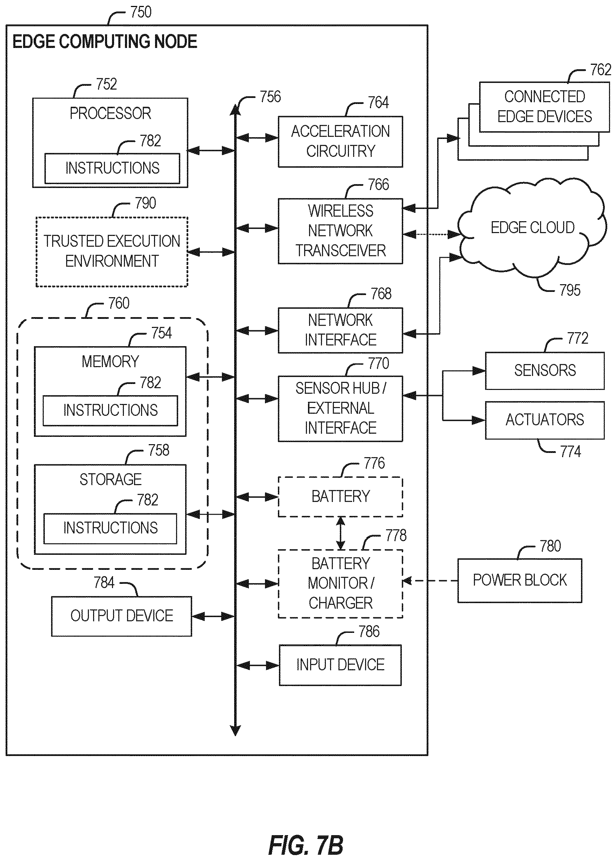

The network components of the edge cloud 110 may be servers, multi-tenant servers, appliance computing devices, and/or any other type of computing devices. For example, the edge cloud 110 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 7B. The edge cloud 110 may also include one or more servers and/or one or more multi-tenant servers. Such a server may include an operating system and a virtual computing environment. A virtual computing environment may include a hypervisor managing (spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

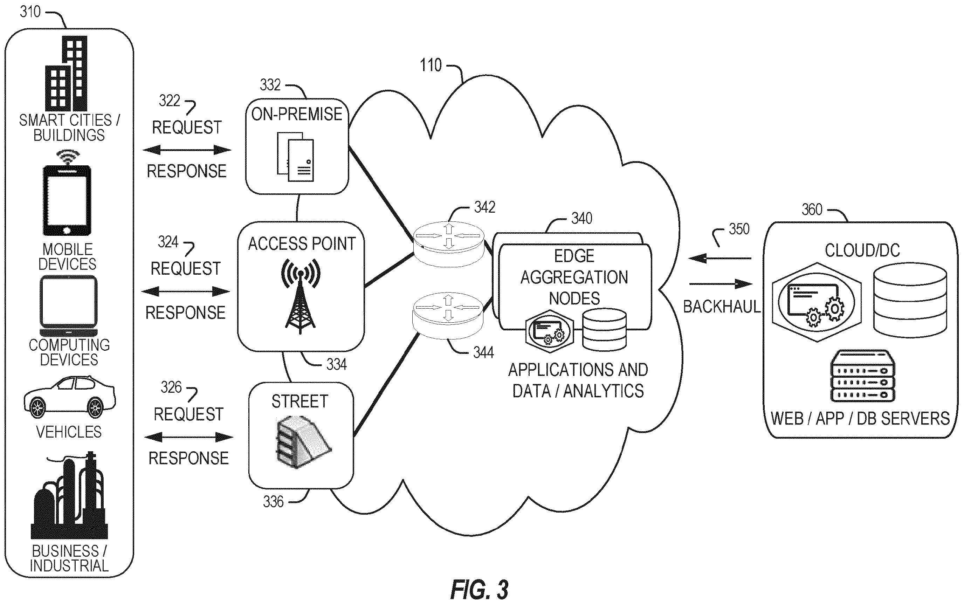

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the edge cloud 110 to aggregate traffic and requests. Thus, within the edge cloud 110, the TSP may deploy various compute and storage resources, such as at edge aggregation nodes 340, to provide requested content. The edge aggregation nodes 340 and other systems of the edge cloud 110 are connected to a cloud or data center 360, which uses a backhaul network 350 to fulfill higher-latency requests from a cloud/data center for websites, applications, database servers, etc. Additional or consolidated instances of the edge aggregation nodes 340 and the aggregation points 342, 344, including those deployed on a single server framework, may also be present within the edge cloud 110 or other areas of the TSP infrastructure.

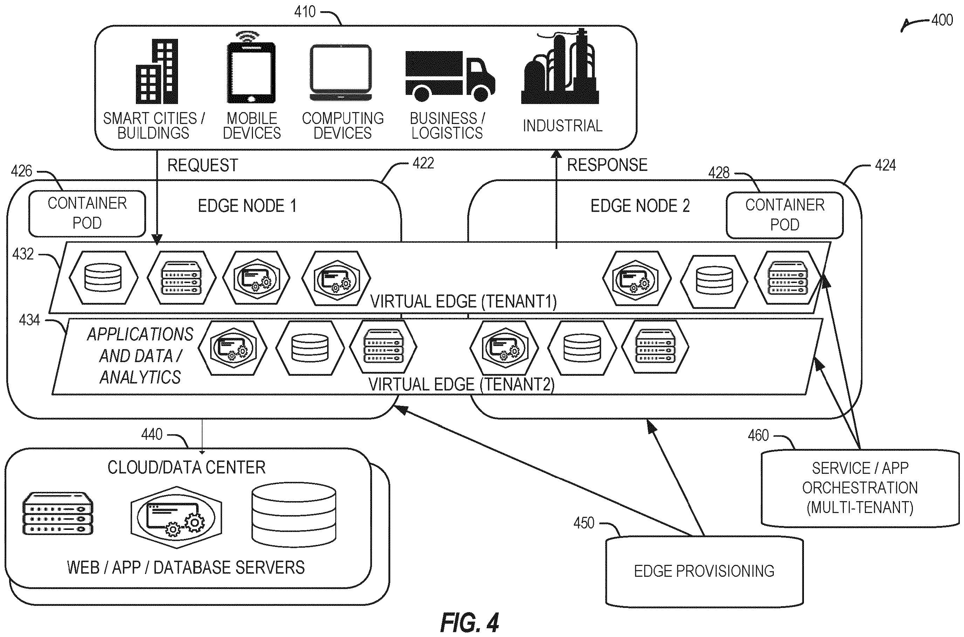

FIG. 4 illustrates deployment and orchestration for virtual edge configurations across an edge computing system operated among multiple edge nodes and multiple tenants. Specifically, FIG. 4 depicts coordination of a first edge node 422 and a second edge node 424 in an edge computing system 400, to fulfill requests and responses for various client endpoints 410 (e.g., smart cities / building systems, mobile devices, computing devices, business/logistics systems, industrial systems, etc.), which access various virtual edge instances. Here, the virtual edge instances 432, 434 provide edge compute capabilities and processing in an edge cloud, with access to a cloud/data center 440 for higher-latency requests for websites, applications, database servers, etc. However, the edge cloud enables coordination of processing among multiple edge nodes for multiple tenants or entities.

In the example of FIG. 4, these virtual edge instances include: a first virtual edge 432, offered to a first tenant (Tenant 1), which offers a first combination of edge storage, computing, and services; and a second virtual edge 434, offering a second combination of edge storage, computing, and services. The virtual edge instances 432, 434 are distributed among the edge nodes 422, 424, and may include scenarios in which a request and response are fulfilled from the same or different edge nodes. The configuration of the edge nodes 422, 424 to operate in a distributed yet coordinated fashion occurs based on edge provisioning functions 450. The functionality of the edge nodes 422, 424 to provide coordinated operation for applications and services, among multiple tenants, occurs based on orchestration functions 460.

It should be understood that some of the devices in 410 are multi-tenant devices where Tenant 1 may function within a tenant 1 'slice' while a Tenant 2 may function within a tenant2 slice (and, in further examples, additional or sub-tenants may exist; and each tenant may even be specifically entitled and transactionally tied to a specific set of features all the way day to specific hardware features). A trusted multi-tenant device may further contain a tenant specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 422, 424 may operate as security feature enforcement points for local resources allocated to multiple tenants per node. Additionally, tenant runtime and application execution (e.g., in instances 432, 434) may serve as an enforcement point for a security feature that creates a virtual edge abstraction of resources spanning potentially multiple physical hosting platforms. Finally, the orchestration functions 460 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitionings may contain a RoT capability and where fan-out and layering according to a DICE model may further be applied to Edge Nodes. Cloud computing nodes consisting of containers, FaaS engines, Servlets, servers, or other computation abstraction may be partitioned according to a DICE layering and fan-out structure to support a RoT context for each. Accordingly, the respective RoTs spanning devices 410, 422, and 440 may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 4. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each edge node 422, 424 may implement the use of containers, such as with the use of a container "pod" 426, 428 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 432, 434 are partitioned according to the needs of each container.

With the use of container pods, a pod controller oversees the partitioning and allocation of containers and resources. The pod controller receives instructions from an orchestrator (e.g., orchestrator 460) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 460 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

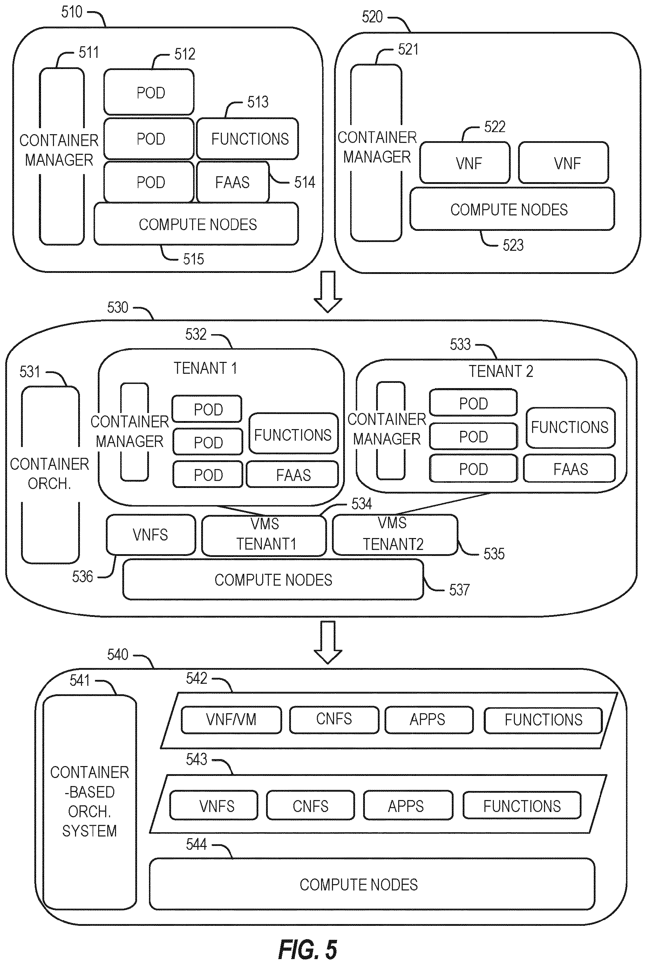

FIG. 5 illustrates additional compute arrangements deploying containers in an edge computing system. As a simplified example, system arrangements 510, 520 depict settings in which a pod controller (e.g., container managers 511, 521, and container orchestrator 531) is adapted to launch containerized pods, functions, and functions-as-a-service instances through execution via compute nodes (515 in arrangement 510), or to separately execute containerized virtualized network functions through execution via compute nodes (523 in arrangement 520). This arrangement is adapted for use of multiple tenants in system arrangement 530 (using compute nodes 537), where containerized pods (e.g., pods 512), functions (e.g., functions 513, VNFs 522, 536), and functions-as-a-service instances (e.g., FaaS instance 514) are launched within virtual machines (e.g., VMs 534, 535 for tenants 532, 533) specific to respective tenants (aside the execution of virtualized network functions). This arrangement is further adapted for use in system arrangement 540, which provides containers 542, 543, or execution of the various functions, applications, and functions on compute nodes 544, as coordinated by an container-based orchestration system 541.

The system arrangements of depicted in FIG. 5 provides an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple edge owners, coordinated by an orchestrator.

In the context of FIG. 5, the pod controller/container manager, container orchestrator, and individual nodes may provide a security enforcement point. However, tenant isolation may be orchestrated where the resources allocated to a tenant are distinct from resources allocated to a second tenant, but edge owners cooperate to ensure resource allocations are not shared across tenant boundaries. Or, resource allocations could be isolated across tenant boundaries, as tenants could allow "use" via a subscription or transaction/contract basis. In these contexts, virtualization, containerization, enclaves and hardware partitioning schemes may be used by edge owners to enforce tenancy. Other isolation environments may include: bare metal (dedicated) equipment, virtual machines, containers, virtual machines on containers, or combinations thereof.

In further examples, aspects of software-defined or controlled silicon hardware, and other configurable hardware, may integrate with the applications, functions, and services an edge computing system. Software defined silicon may be used to ensure the ability for some resource or hardware ingredient to fulfill a contract or service level agreement, based on the ingredient's ability to remediate a portion of itself or the workload (e.g., by an upgrade, reconfiguration, or provision of new features within the hardware configuration itself).

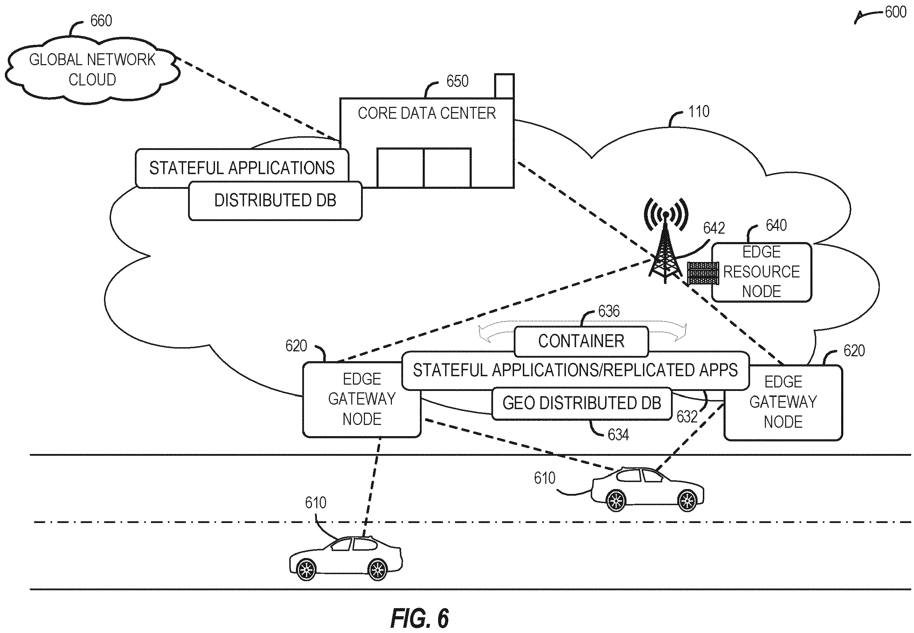

It should be appreciated that the edge computing systems and arrangements discussed herein may be applicable in various solutions, services, and/or use cases involving mobility. As an example, FIG. 6 shows a simplified vehicle compute and communication use case involving mobile access to applications in an edge computing system 600 that implements an edge cloud 110. In this use case, respective client compute nodes 610 may be embodied as in-vehicle compute systems (e.g., in-vehicle navigation and/or infotainment systems) located in corresponding vehicles which communicate with the edge gateway nodes 620 during traversal of a roadway. For instance, the edge gateway nodes 620 may be located in a roadside cabinet or other enclosure built-into a structure having other, separate, mechanical utility, which may be placed along the roadway, at intersections of the roadway, or other locations near the roadway. As respective vehicles traverse along the roadway, the connection between its client compute node 610 and a particular edge gateway device 620 may propagate so as to maintain a consistent connection and context for the client compute node 610. Likewise, mobile edge nodes may aggregate at the high priority services or according to the throughput or latency resolution requirements for the underlying service(s) (e.g., in the case of drones). The respective edge gateway devices 620 include an amount of processing and storage capabilities and, as such, some processing and/or storage of data for the client compute nodes 610 may be performed on one or more of the edge gateway devices 620.

The edge gateway devices 620 may communicate with one or more edge resource nodes 640, which are illustratively embodied as compute servers, appliances or components located at or in a communication base station 642 (e.g., a based station of a cellular network). As discussed above, the respective edge resource nodes 640 include an amount of processing and storage capabilities and, as such, some processing and/or storage of data for the client compute nodes 610 may be performed on the edge resource node 640. For example, the processing of data that is less urgent or important may be performed by the edge resource node 640, while the processing of data that is of a higher urgency or importance may be performed by the edge gateway devices 620 (depending on, for example, the capabilities of each component, or information in the request indicating urgency or importance). Based on data access, data location or latency, work may continue on edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The edge resource node(s) 640 also communicate with the core data center 650, which may include compute servers, appliances, and/or other components located in a central location (e.g., a central office of a cellular communication network). The core data center 650 may provide a gateway to the global network cloud 660 (e.g., the Internet) for the edge cloud 110 operations formed by the edge resource node(s) 640 and the edge gateway devices 620. Additionally, in some examples, the core data center 650 may include an amount of processing and storage capabilities and, as such, some processing and/or storage of data for the client compute devices may be performed on the core data center 650 (e.g., processing of low urgency or importance, or high complexity).

The edge gateway nodes 620 or the edge resource nodes 640 may offer the use of stateful applications 632 and a geographic distributed database 634. Although the applications 632 and database 634 are illustrated as being horizontally distributed at a layer of the edge cloud 110, it will be understood that resources, services, or other components of the application may be vertically distributed throughout the edge cloud (including, part of the application executed at the client compute node 610, other parts at the edge gateway nodes 620 or the edge resource nodes 640, etc.). Additionally, as stated previously, there can be peer relationships at any level to meet service objectives and obligations. Further, the data for a specific client or application can move from edge to edge based on changing conditions (e.g., based on acceleration resource availability, following the car movement, etc.). For instance, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 636 (or pod of containers) may be flexibly migrated from an edge node 620 to other edge nodes (e.g., 620, 640, etc.) such that the container with an application and workload does not need to be reconstituted, re-compiled, re-interpreted in order for migration to work. However, in such settings, there may be some remedial or "swizzling" translation operations applied. For example, the physical hardware at node 640 may differ from edge gateway node 620 and therefore, the hardware abstraction layer (HAL) that makes up the bottom edge of the container will be re-mapped to the physical layer of the target edge node. This may involve some form of late-binding technique, such as binary translation of the HAL from the container native format to the physical hardware format, or may involve mapping interfaces and operations. A pod controller may be used to drive the interface mapping as part of the container lifecycle, which includes migration to/from different hardware environments.

The scenarios encompassed by FIG. 6 may utilize various types of mobile edge nodes, such as an edge node hosted in a vehicle (car/truck/tram/train) or other mobile unit, as the edge node will move to other geographic locations along the platform hosting it. With vehicle-to-vehicle communications, individual vehicles may even act as network edge nodes for other cars, (e.g., to perform caching, reporting, data aggregation, etc.). Thus, it will be understood that the application components provided in various edge nodes may be distributed in static or mobile settings, including coordination between some functions or operations at individual endpoint devices or the edge gateway nodes 620, some others at the edge resource node 640, and others in the core data center 650 or global network cloud 660.

In further configurations, the edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an edge node or data center. A trigger such as, for example, a service use case or an edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubernetes container, a virtual machine, etc. Within the edge computing system, various datacenter, edge, and endpoint (including mobile) devices are used to "spin up" functions (e.g., activate and/or allocate function actions) that are scaled on demand. The function code gets executed on the physical infrastructure (e.g., edge computing node) device and underlying virtualized containers. Finally, container is "spun down" (e.g., deactivated and/or deallocated) on the infrastructure in response to the execution being completed.

Further aspects of FaaS may enable deployment of edge functions in a service fashion, including a support of respective functions that support edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The edge computing system 600 can include or be in communication with an edge provisioning node 644. The edge provisioning node 644 can distribute software such as the example computer readable instructions 782 of FIG. 7B, to various receiving parties for implementing any of the methods described herein. The example edge provisioning node 644 may be implemented by any computer server, home server, content delivery network, virtual server, software distribution system, central facility, storage device, storage node, data facility, cloud service, etc., capable of storing and/or transmitting software instructions (e.g., code, scripts, executable binaries, containers, packages, compressed files, and/or derivatives thereof) to other computing devices. Component(s) of the example edge provisioning node 644 may be located in a cloud, in a local area network, in an edge network, in a wide area network, on the Internet, and/or any other location communicatively coupled with the receiving party(ies). The receiving parties may be customers, clients, associates, users, etc. of the entity owning and/or operating the edge provisioning node 644. For example, the entity that owns and/or operates the edge provisioning node 644 may be a developer, a seller, and/or a licensor (or a customer and/or consumer thereof) of software instructions such as the example computer readable instructions 782 of FIG. 7B. The receiving parties may be consumers, service providers, users, retailers, OEMs, etc., who purchase and/or license the software instructions for use and/or re-sale and/or sub-licensing.

In an example, edge provisioning node 644 includes one or more servers and one or more storage devices. The storage devices host computer readable instructions such as the example computer readable instructions 782 of FIG. 7B, as described below. Similarly to edge gateway devices 620 described above, the one or more servers of the edge provisioning node 644 are in communication with a base station 642 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third party payment entity. The servers enable purchasers and/or licensors to download the computer readable instructions 782 from the edge provisioning node 644. For example, the software instructions, which may correspond to the example computer readable instructions 782 of FIG. 7B, may be downloaded to the example processor platform/s, which is to execute the computer readable instructions 782 to implement the methods described herein.

In some examples, the processor platform(s) that execute the computer readable instructions 782 can be physically located in different geographic locations, legal jurisdictions, etc. In some examples, one or more servers of the edge provisioning node 644 periodically offer, transmit, and/or force updates to the software instructions (e.g., the example computer readable instructions 782 of FIG. 7B) to ensure improvements, patches, updates, etc. are distributed and applied to the software instructions implemented at the end user devices. In some examples, different components of the computer readable instructions 782 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

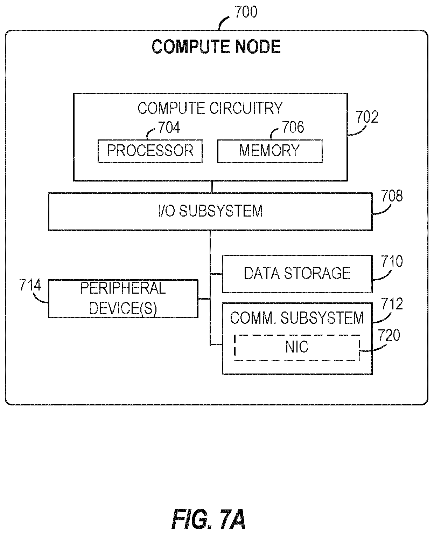

In further examples, any of the compute nodes or devices discussed with reference to the present edge computing systems and environment may be fulfilled based on the components depicted in FIGS. 7A and 7B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 7A, an edge compute node 700 includes a compute engine (also referred to herein as "compute circuitry") 702, an input/output (I/O) subsystem 708, data storage 710, a communication circuitry subsystem 712, and, optionally, one or more peripheral devices 714. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 700 may be embodied as any type of engine, device, or collection of devices capable of performing various compute functions. In some examples, the compute node 700 may be embodied as a single device such as an integrated circuit, an embedded system, a field-programmable gate array (FPGA), a system-on-a-chip (SOC), or other integrated system or device. In the illustrative example, the compute node 700 includes or is embodied as a processor 704 and a memory 706. The processor 704 may be embodied as any type of processor capable of performing the functions described herein (e.g., executing an application). For example, the processor 704 may be embodied as a multi-core processor(s), a microcontroller, a processing unit, a specialized or special purpose processing unit, or other processor or processing/controlling circuit.

In some examples, the processor 704 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 704 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 704 may work in coordination with each other to execute many types of operations and instructions within and on behalf of the compute node 700.

The memory 706 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 706 may be integrated into the processor 704. The memory 706 may store various software and data used during operation such as one or more applications, data operated on by the application(s), libraries, and drivers.

The compute circuitry 702 is communicatively coupled to other components of the compute node 700 via the I/O subsystem 708, which may be embodied as circuitry and/or components to facilitate input/output operations with the compute circuitry 702 (e.g., with the processor 704 and/or the main memory 706) and other components of the compute circuitry 702. For example, the I/O subsystem 708 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 708 may form a portion of a system-on-a-chip (SoC) and be incorporated, along with one or more of the processor 704, the memory 706, and other components of the compute circuitry 702, into the compute circuitry 702.

The one or more illustrative data storage devices 710 may be embodied as any type of devices configured for short-term or long-term storage of data such as, for example, memory devices and circuits, memory cards, hard disk drives, solid-state drives, or other data storage devices. Individual data storage devices 710 may include a system partition that stores data and firmware code for the data storage device 710. Individual data storage devices 710 may also include one or more operating system partitions that store data files and executables for operating systems depending on, for example, the type of compute node 700.

The communication circuitry 712 may be embodied as any communication circuit, device, or collection thereof, capable of enabling communications over a network between the compute circuitry 702 and another compute device (e.g., an edge gateway of an implementing edge computing system). The communication circuitry 712 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 712 includes a network interface controller (NIC) 720, which may also be referred to as a host fabric interface (HFI). The NIC 720 may be embodied as one or more add-in-boards, daughter cards, network interface cards, controller chips, chipsets, or other devices that may be used by the compute node 700 to connect with another compute device (e.g., an edge gateway node). In some examples, the NIC 720 may be embodied as part of a system-on-a-chip (SoC) that includes one or more processors, or included on a multichip package that also contains one or more processors. In some examples, the NIC 720 may include a local processor (not shown) and/or a local memory (not shown) that are both local to the NIC 720. In such examples, the local processor of the NIC 720 may be capable of performing one or more of the functions of the compute circuitry 702 described herein. Additionally, or alternatively, in such examples, the local memory of the NIC 720 may be integrated into one or more components of the client compute node at the board level, socket level, chip level, and/or other levels.

Additionally, in some examples, a respective compute node 700 may include one or more peripheral devices 714. Such peripheral devices 714 may include any type of peripheral device found in a compute device or server such as audio input devices, a display, other input/output devices, interface devices, and/or other peripheral devices, depending on the particular type of the compute node 700. In further examples, the compute node 700 may be embodied by a respective edge compute node (whether a client, gateway, or aggregation node) in an edge computing system or like forms of appliances, computers, subsystems, circuitry, or other components.

In a more detailed example, FIG. 7B illustrates a block diagram of an example of components that may be present in an edge computing node 750 for implementing the techniques (e.g., operations, processes, methods, and methodologies) described herein. This edge computing node 750 provides a closer view of the respective components of node 700 when implemented as or as part of a computing device (e.g., as a mobile device, a base station, server, gateway, etc.). The edge computing node 750 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 750, or as components otherwise incorporated within a chassis of a larger system.

The edge computing device 750 may include processing circuitry in the form of a processor 752, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 752 may be a part of a system on a chip (SoC) in which the processor 752 and other components are formed into a single integrated circuit, or a single package, such as the Edison^{™} or Galileo^{™} SoC boards from Intel Corporation, Santa Clara, California. As an example, the processor 752 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 752 and accompanying circuitry may be provided in a single socket form factor, multiple socket form factor, or a variety of other formats, including in limited hardware configurations or configurations that include fewer than all elements shown in FIG. 7B.

The processor 752 may communicate with a system memory 754 over an interconnect 756 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 758 may also couple to the processor 752 via the interconnect 756. In an example, the storage 758 may be implemented via a solid-state disk drive (SSDD). Other devices that may be used for the storage 758 include flash memory cards, such as Secure Digital (SD) cards, microSD cards, extreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), antiferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 758 may be on-die memory or registers associated with the processor 752. However, in some examples, the storage 758 may be implemented using a micro hard disk drive (HDD). Further, any number of new technologies may be used for the storage 758 in addition to, or instead of, the technologies described, such resistance change memories, phase change memories, holographic memories, or chemical memories, among others.

The components may communicate over the interconnect 756. The interconnect 756 may include any number of technologies, including industry standard architecture (ISA), extended ISA (EISA), peripheral component interconnect (PCI), peripheral component interconnect extended (PCIx), PCI express (PCIe), or any number of other technologies. The interconnect 756 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 756 may couple the processor 752 to a transceiver 766, for communications with the connected edge devices 762. The transceiver 766 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 762. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 766 (or multiple transceivers) may communicate using multiple standards or radios for communications at a different range. For example, the edge computing node 750 may communicate with close devices, e.g., within about 10 meters, using a local transceiver based on Bluetooth Low Energy (BLE), or another low power radio, to save power. More distant connected edge devices 762, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 766 (e.g., a radio transceiver) may be included to communicate with devices or services in the edge cloud 795 via local or wide area network protocols. The wireless network transceiver 766 may be a low-power wide-area (LPWA) transceiver that follows the IEEE 802.15.4, or IEEE 802.15.4g standards, among others. The edge computing node 750 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 766, as described herein. For example, the transceiver 766 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 766 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 768 may be included to provide a wired communication to nodes of the edge cloud 795 or to other devices, such as the connected edge devices 762 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 768 may be included to enable connecting to a second network, for example, a first NIC 768 providing communications to the cloud over Ethernet, and a second NIC 768 providing communications to other devices over another type of network.

Given the variety of types of applicable communications from the device to another component or network, applicable communications circuitry used by the device may include or be embodied by any one or more of components 764, 766, 768, or 770. Accordingly, in various examples, applicable means for communicating (e.g., receiving, transmitting, etc.) may be embodied by such communications circuitry.

The edge computing node 750 may include or be coupled to acceleration circuitry 764, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 756 may couple the processor 752 to a sensor hub or external interface 770 that is used to connect additional devices or subsystems. The devices may include sensors 772, such as accelerometers, level sensors, flow sensors, optical light sensors, camera sensors, temperature sensors, global navigation system (e.g., GPS) sensors, pressure sensors, barometric pressure sensors, and the like. The hub or interface 770 further may be used to connect the edge computing node 750 to actuators 774, such as power switches, valve actuators, an audible sound generator, a visual warning device, and the like.

In some optional examples, various input/output (I/O) devices may be present within or connected to, the edge computing node 750. For example, a display or other output device 784 may be included to show information, such as sensor readings or actuator position. An input device 786, such as a touch screen or keypad may be included to accept input. An output device 784 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 750. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 776 may power the edge computing node 750, although, in examples in which the edge computing node 750 is mounted in a fixed location, it may have a power supply coupled to an electrical grid, or the battery may be used as a backup or for temporary capabilities. The battery 776 may be a lithium ion battery, or a metal-air battery, such as a zinc-air battery, an aluminum-air battery, a lithium-air battery, and the like.

A battery monitor/charger 778 may be included in the edge computing node 750 to track the state of charge (SoCh) of the battery 776, if included. The battery monitor/charger 778 may be used to monitor other parameters of the battery 776 to provide failure predictions, such as the state of health (SoH) and the state of function (SoF) of the battery 776. The battery monitor/charger 778 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 778 may communicate the information on the battery 776 to the processor 752 over the interconnect 756. The battery monitor/charger 778 may also include an analog-to-digital (ADC) converter that enables the processor 752 to directly monitor the voltage of the battery 776 or the current flow from the battery 776. The battery parameters may be used to determine actions that the edge computing node 750 may perform, such as transmission frequency, mesh network operation, sensing frequency, and the like.

A power block 780, or other power supply coupled to a grid, may be coupled with the battery monitor/charger 778 to charge the battery 776. In some examples, the power block 780 may be replaced with a wireless power receiver to obtain the power wirelessly, for example, through a loop antenna in the edge computing node 750. A wireless battery charging circuit, such as an LTC4020 chip from Linear Technologies of Milpitas, California, among others, may be included in the battery monitor/charger 778. The specific charging circuits may be selected based on the size of the battery 776, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 758 may include instructions 782 in the form of software, firmware, or hardware commands to implement the techniques described herein. Although such instructions 782 are shown as code blocks included in the memory 754 and the storage 758, it may be understood that any of the code blocks may be replaced with hardwired circuits, for example, built into an application specific integrated circuit (ASIC).

In an example, the instructions 782 provided via the memory 754, the storage 758, or the processor 752 may be embodied as a non-transitory, machine-readable medium 760 including code to direct the processor 752 to perform electronic operations in the edge computing node 750. The processor 752 may access the non-transitory, machine-readable medium 760 over the interconnect 756. For instance, the non-transitory, machine-readable medium 760 may be embodied by devices described for the storage 758 or may include specific storage units such as optical disks, flash drives, or any number of other hardware devices. The non-transitory, machine-readable medium 760 may include instructions to direct the processor 752 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 782 on the processor 752 (separately, or in combination with the instructions 782 of the machine readable medium 760) may configure execution or operation of a trusted execution environment (TEE) 790. In an example, the TEE 790 operates as a protected area accessible to the processor 752 for secure execution of instructions and secure access to data. Various implementations of the TEE 790, and an accompanying secure area in the processor 752 or the memory 754 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 750 through the TEE 790 and the processor 752.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

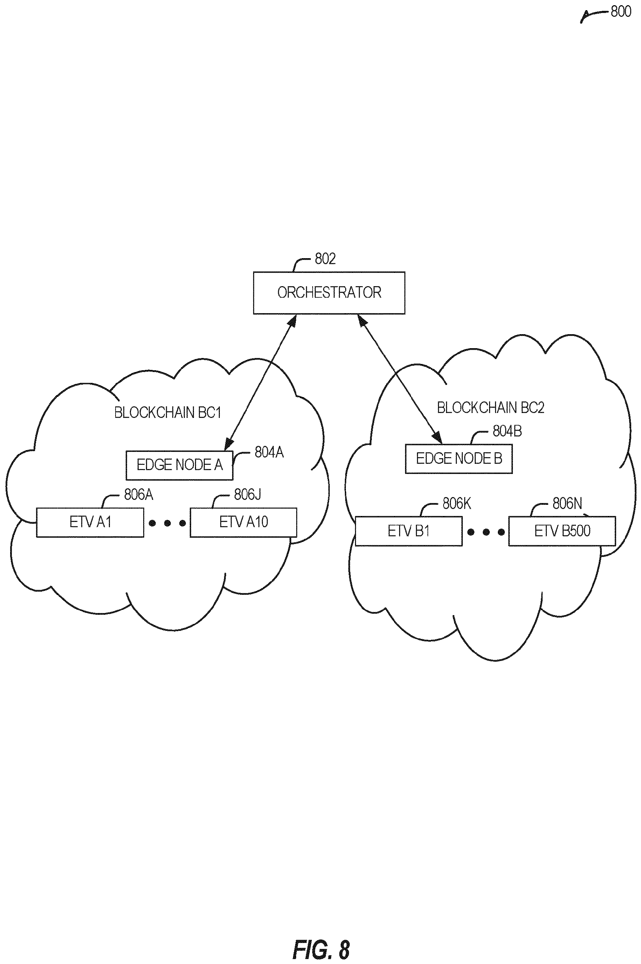

FIG. 8 is a diagram illustrating an operating environment 800, according to an embodiment. The environment 800 includes an orchestrator 802, which manages workloads over edge node A 804A and edge node B 804B. Each edge node 804A, 804B may have a reputation score. The reputation score is used by the orchestrator 802 to schedule workloads.

Edge node 804A is part of a group of nodes that keep track of each other's reputation scores in a blockchain (blockchain BC1). Similarly, edge node 804B is part of a different group so nodes that use blockchain BC2 to maintain reputation scores of the nodes that are members of the blockchain. Each node in a blockchain group has a reputation score.

Reputation may be based one or more factors, including past performances of workloads, telemetry of resources used during performance, security assessments, or feedback. For instance, edge nodes may build a reputation score based on a track record of workload executions that fall within expected SLA or KPI parameters such as latency, jitter, heat, and power (watts) utilized. The reputation score reflects telemetry collected in addition to SLA or KPI parameters. The telemetry is based on resource utilization (e.g. memory, network, storage, DMA, instructions, cache use/misses/hits, etc.). Reputation scores may also reflect security and resiliency properties that are obtained via security assessments such as attestation, antivirus scans, and so forth. Resiliency properties may be related to software update, error detection and rollback, reset and reboot behaviors. Reputation scores may be related to feedback provided by services or edge users that have been scheduled by a particular orchestration and that have perceived a given quality. This feedback may be weighted based on the reputation of the service or service tenant.

A reputation score may be used to manage risk associated with the use of a particular edge node that may host a particular service to process a workload. The reputation score may be used by the orchestrator 802 to intelligently select an edge node for hosting services or performing particular workloads.

Services hosted on edge nodes 804A, 804B may have trust differentials depending on the number of "validators" that appraise attestation evidence and achieve similar results. These validator nodes are referred to herein as Edge Trust Validator (ETV) nodes 806A, 806B, ..., 806N (collectively referred to as 806). Each ETV node 806 may have a reputation score based on a track record for the number of security vulnerabilities found. Thus, the ETV nodes 806 are trusted based on their reliability and track record. Additionally, the location of an edge node may affect its level of trust.

In summary, edge nodes 804A, 804B may have reputation scores, which may be determined at least in part by ETV nodes 806. Edge nodes 804A and 804B may act as ETV nodes for other nodes in the group associated with the blockchain. Each of the ETV nodes 806 may each have their own reputation score, which may affect the reputation score of the edge node 804A, 804B. Note that the level of trust and number of ETV nodes 806 may evolve over time depending on the services available. A blockchain may be created and managed by ETV nodes 806 of a particular edge node 804A, 804B. Because the number of ETV nodes 806 may change over time for a given edge node 804A, 804B, the corresponding blockchain may evolve over time for a particular edge location.

For example, edge nodes A 804A and B 804B may offer the same service S1. Edge node 804A may depend on 10-node blockchain with ETV nodes 806 (ETVA1 - ETVA10) that appraise and validate the S1 service at edge node A 804A. Edge node B 804B may depend on 500-node blockchain with ETV nodes 806 (ETVB1 - ETVB500) that appraise and validate the S1 service at edge node B 804B.

Each ETV 806 may have a reputation score, where the reputation is used to determine membership in the corresponding ETV blockchain. For example, a blockchain membership policy may require an ETV reputation score threshold of > 0.98 (range 0 to 1). The reputation score for a node in the blockchain group is improved for each successful attestation appraisal of an edge node 804A, 804B that contributes to the consensus majority. The score is diminished when the attestation result is not substantiated by the majority of peer ETVs 806. If the reputation score falls below the threshold the ETV node 806 may be removed from the blockchain. After removal, the ETV node 806 may be scheduled for maintenance or security evaluations.

For instance, the blockchain threshold score (e.g., 0.75) establishes a confidence value that can be associated with a service (S1) at a hosting site (e.g., edge node A 804A). A second blockchain may have a second threshold score (e.g., 0.99), which a second edge node B 804B uses to establish a confidence value. Therefore, the edge network services may be given confidence values based on a consensus evaluation of attestation appraisals.

Hence a particular edge orchestrator 802, may select between performing a requested service S1 at edge node A 804A versus using the same service S1 at edge node B 804B, depending on which offers the most appropriate cost and risk trade-off. The cost of operating a 500-node blockchain may be 50x the cost of a 10-node blockchain. But a 0.99 confidence score may offset a greater portion of risk. For example, if an edge workload transaction is valued at $1M, then there is only $10,000 at risk with 0.99 confidence. But a confidence score of 0.75 results in a $250,000 risk; which is a $240,000 differential. If the opportunity cost of the workload transaction exceeds $240,000, it may be beneficial for an edge orchestrator 802 to schedule the workload on edge node A 804A.

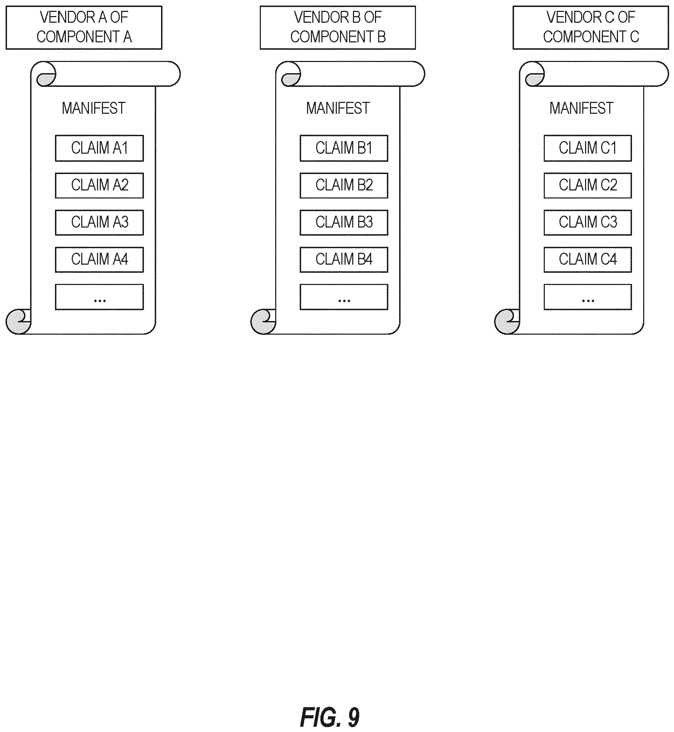

FIG. 9 shows Edge Node equipment vendors supplying components of an Edge Node where each vendor produces a manifest describing the component produced. The vendor asserts claims that may be useful for evaluating the trustworthiness and reputation of the Edge Nodes containing these components. Manifests are supplied to Edge Trust Verifier (ETV) nodes (e.g., edge nodes A 804A and B 804B) in an Edge network deployment.

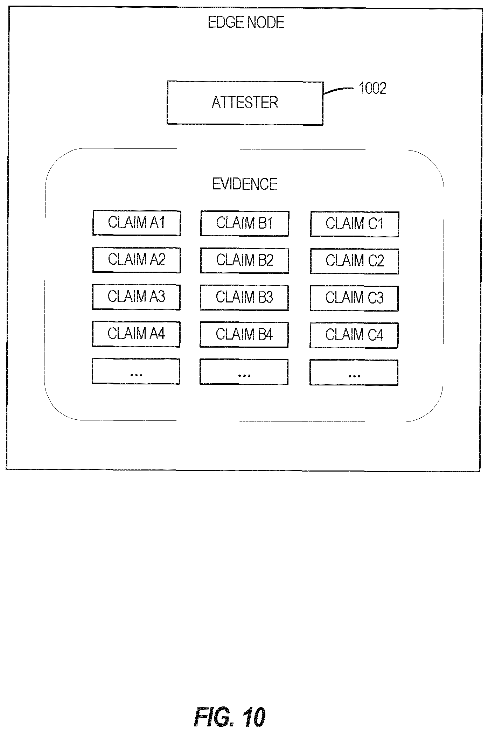

FIG. 10 shows an Edge Node (e.g., edge nodes A 804A and B 804B) containing an Attester function that securely reports attestation Evidence to an Edge Trust Verifier. The attester function 1002 may be implemented using an ASIC, FPGA, or other hardware configured to perform attestation. Evidence consists of a set of claims that the Attester asserts are true (relevant to this instance of an Edge Node).

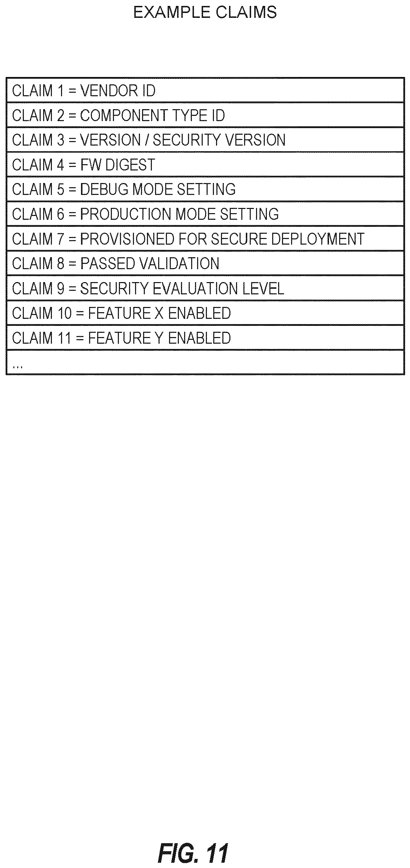

FIG. 11 shows example claims that both an Edge Node and vendors of Edge Nodes may assert as properties of a manufactured and deployed Edge Node (e.g., edge nodes A 804A and B 804B). Several claims may be especially useful for identifying the class of component manufactured and deployed such as Vendor, Component Type, and Version. Other claims are useful for comparing the Attester-asserted claims to vendor-asserted claims to determine if the values differ. Differing values may be an indication of an unauthorized change to the deployed edge node according to the claims made by its manufacturer. Attester claims may also contain assertions of actual states the Edge Node is in when the Evidence is generated and may indicate an operational profile that may be more or less secure for a particular Edge workload or SLA such as `Debug mode' operation.

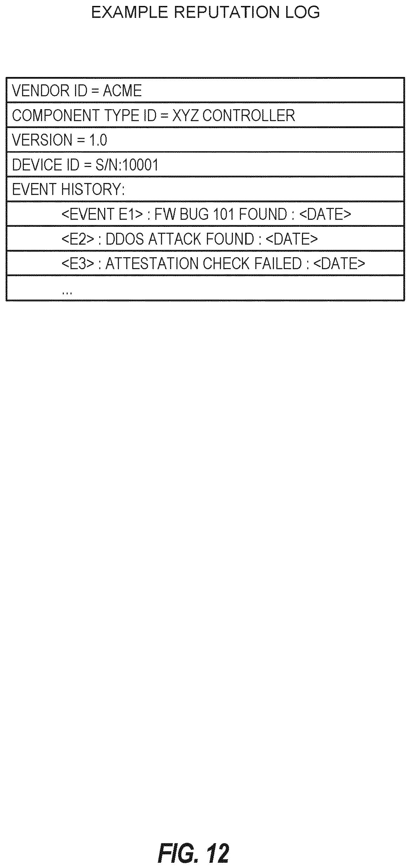

FIG. 12 shows an example reputation log that, for a particular instance of an Edge Node (e.g., edge nodes A 804A and B 804B) contains a history of events pertaining to the edge node that affect trustworthiness. For example, a firmware bug, denial of service attack or failure to pass a compliance check.

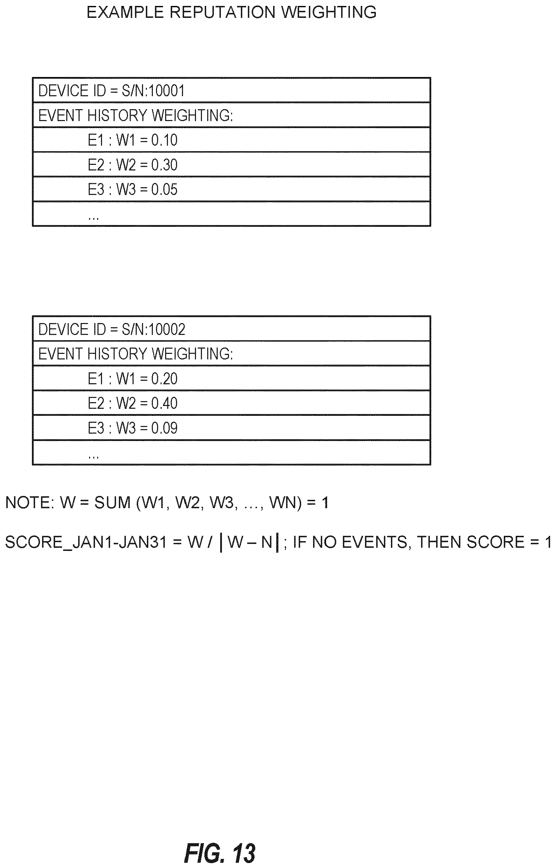

FIG. 13 shows an example reputation weighting scheme that assigns a weight to each of the entries in an reputation log such that the relative significance of the event with respect to the other events is determined. The sum of the weights equals 1 such that the percentage value for a particular event is quantified. The reputation log is collected over a period of time such as from January 1 to January 31. This allows other Edge Node reputation logs to be compared across a common period of time. A device specific reputation score can be computed by dividing the normalized score W from the absolute value of the normalized score minus the number of events during the period (N). The result is value that is specific to an instance of the deployed Edge Node. Different deployed nodes may have different values based on how much use they receive, how exposed it is to attackers, resource utilization it receives and so forth. If no events are found, then the value remains 1. If many events are found, then the value approaches zero.

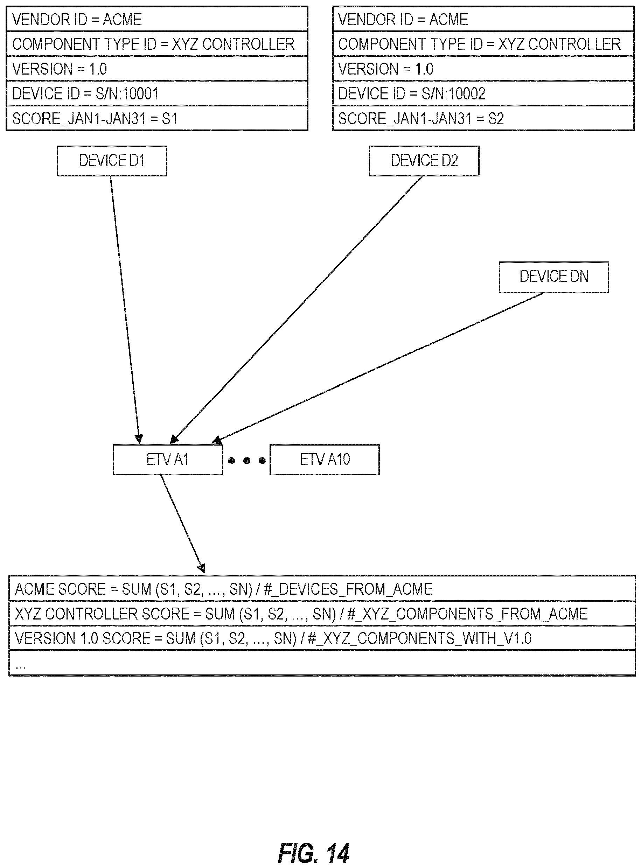

FIG. 14 shows an ETV node collecting Reputation logs from a variety of Edge Nodes where Edge Nodes may have both similar and different sets of claims. Logged events may be grouped according to various claims such as Vendor, Firmware Version, or the like. The reputation log events that apply to the particular component of class of component can be used to arrive at a component or class of component reputation score. The ETV may sample multiple Edge Nodes to obtain reputation log entries that fit into a particular component or component class. A normalized score for the class of component can be found by averaging the scores from the discrete Edge Nodes for the particular class.

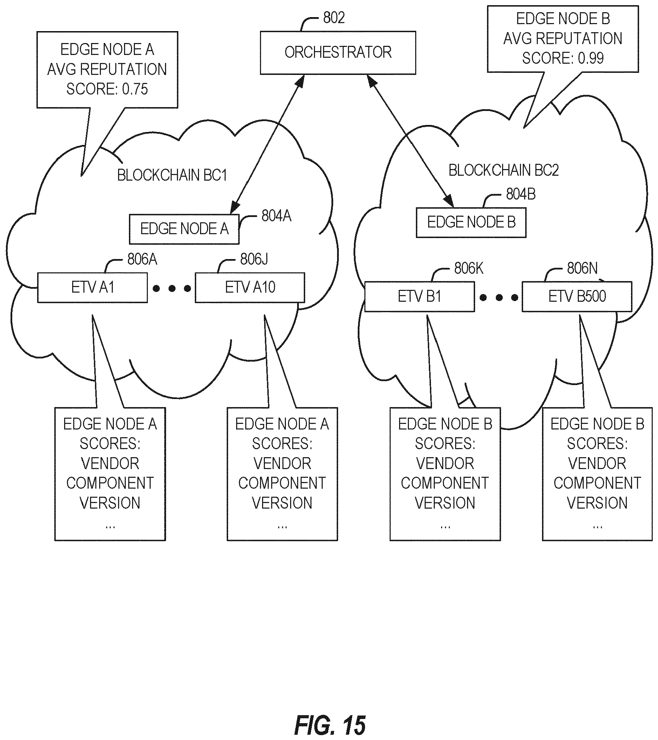

FIG. 15 shows an Edge network containing a blockchain network of Edge Nodes where at least some of the nodes are ETV nodes and where the ETV nodes compute reputation scores for the other Edge nodes in the Edge network. The ETV nodes may use a distributed consensus algorithm to agree on the scores that are attributed to each Edge Node, components of the Edge Nodes or a component class (such as a vendor of Edge Node components). Agreement may consist of an exact match (e.g. if a majority of ETVs arrive at the same score, such as 0.98, then consensus is achieved. Alternatively, consensus can be achieved by a range of scores that bracket or bucket different scores that may be clustered together. For example, ETVs 1 - 10 may produces scores (0.99, 0.98, 0.97, 0.98, 0.97, 0.99, 0.78, 0.69, 0.99, 0.10). In this example, seven scores are within 0.02 of each other, while three vary widely. A threshold policy can be applied that allows a variance in scores, such as +/- 0.02 ) if a majority of ETV blockchain nodes are within the tolerated variance then the ETVs publish the score to the blockchain.

Additional considerations are made by policy that ensures the processes for generating log files are similar across ETVs. For example, if ETV-1 performs an attestation daily while ETV-2 performs them hourly, then there will be different number of log entries potentially resulting in skewed scores. The ETVs will agree on and consistently apply processes that result in logged events to account for skew.

Reputation scores may be calculated based on different factors including past performances of workloads, telemetry of resources used during performance, security assessments, or feedback from a requester or user. A reputation score may be normalized so that it is portable and compatible when comparing a reputation score calculated based on one subset of factors with a reputation score calculated based on a subset of different factors. In an embodiment, reputation scores may not be normalized and instead a "safety band" is used so that reputation scores of different edge nodes or groups of edge nodes may be compared fairly. For instance, a safety band of +/- 0.01 may be used when analyzing reputation scores. Other values for the safety band may be used, such as +/- 0.03, +/- 0.005, etc. Additionally, the safety band may be symmetrical around the threshold. For instance, the safety band may be +0.01, - 0.005.

Trust orchestration may involve evaluating risk associated with multiple stake holders, especially where different stakeholders share or participate in a common workload. Trust orchestration may require trust negotiation, where participants are aware of each other and agree to abide by trust assessments and mitigations. Trust properties may be associated with a tenant, where orchestration may create a Tenant Trust Context (TTC) by allocating tenant-specific slices of resources across several edge nodes 804A, 804B, performing tenant-specific operations.

Further, orchestrators may provide a new interface that allows for applications ("apps") to negotiate SLAs that use security as an attribute or Class of Service (CLOS) by augmenting existing platform Resource Director Technology (RDT) negotiated with apps in edge computing by leaning on platform Trusted Execution Environment (TEE). This allows the orchestrator 802 to dynamically partition or manage resources and make policy based determinations to allocate resources meeting application SLAs. Intel^{®} RDT provides a framework with several component features for cache and memory monitoring and allocation capabilities, including Cache Monitoring Technology (CMT), Cache Allocation Technology (CAT), Code and Data Prioritization (CDP), Memory Bandwidth Monitoring (MBM), and Memory Bandwidth Allocation (MBA). These technologies enable tracking and control of shared resources, such as the Last Level Cache (LLC) and main memory (DRAM) bandwidth, in use by many applications, containers or VMs running on the platform concurrently. RDT may aid "noisy neighbor" detection and help to reduce performance interference, ensuring the performance of key workloads in complex environments. Granularity of security attributes can be used so that parts of a system are allowed to operate (e.g. CPU with no accelerators) based on agreed SLA with apps, and these can be applicable when workload migration happens at the edge or cloud.

CMT is used to provide new insight by monitoring the last-level cache (LLC) utilization by individual threads, applications, or VMs, CMT improves workload characterization, enables advanced resource-aware scheduling decisions, aids "noisy neighbor" detection and improves performance debugging.

CAT provides software-guided redistribution of cache capacity, enabling important data center VMs, containers or applications to benefit from improved cache capacity and reduced cache contention. CAT may be used to enhance runtime determinism and prioritize important applications such as virtual switches or Data Plane Development Kit (DPDK) packet processing apps from resource contention across various priority classes of workloads.

CDP is a specialized extension of CAT. CDP enables separate control over code and data placement in the last-level (L3) cache. Certain specialized types of workloads may benefit with increased runtime determinism, enabling greater predictability in application performance.

Multiple VMs or applications can be tracked independently via Memory Bandwidth Monitoring (MBM), which provides memory bandwidth monitoring for each running thread simultaneously. Benefits include detection of noisy neighbors, characterization and debugging of performance for bandwidth-sensitive applications, and more effective non-uniform memory access (NUMA)-aware scheduling.

MBA enables approximate and indirect control over memory bandwidth available to workloads, enabling new levels of interference mitigation and bandwidth shaping for "noisy neighbors" present on the system.

Other technologies similar to Cache Monitoring Technology (CMT), Cache Allocation Technology (CAT), Code and Data Prioritization (CDP), Memory Bandwidth Monitoring (MBM), and Memory Bandwidth Allocation (MBA) may be used to coordinate, prioritize, and manage workloads.

There are potentially other workload hosting environments besides TEE such as FPGAs that have a DICE (Device Identity Composition Engine) or other Root of Trust, and are able to boot the FPGA securely into an FPGA Secure Device Manager (SDM) that offer similar protections as a TEE. Similarly, a GPU, IPU, NPU and generally xPU may have a security micro controller, security engine or similar SDM that uses a hardware root of trust to boot into a secure device manager.

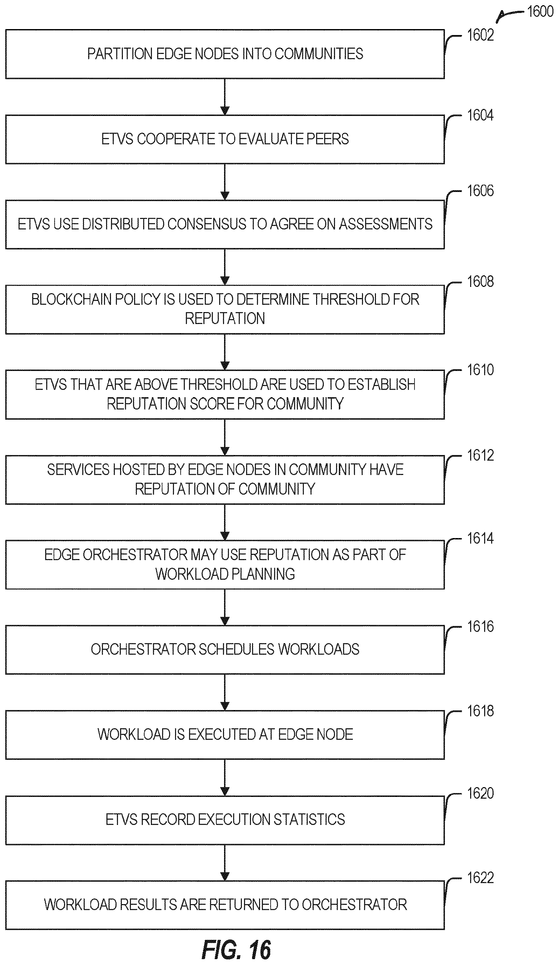

FIG. 16 is a flowchart illustrating control and data flow, according to an embodiment. At 1602, edge nodes having blockchain capability are partitioned into blockchain communities of various sizes. Edge nodes in the community are called Edge Trust Validators (ETV).

Edge Nodes may be grouped according to a variety of strategies. For example, an Edge FaaS Flavor cluster may organize a group of nodes to specialize in the distributed computation of a particular function, such as video encoding or AI model training, or more traditionally Monte Carlo analysis, Fourier analysis, etc. Other configurations of group nodes may be based on storage locality, pooling, or geo-location. Other nodes are grouped according to latency properties such as relative position to a Base Station or RAN. Others are grouped by participation in LEO satellites or by GEO satellites and applications suitable such as GPS and time beaconing. Others groupings are based on location of Edge services such as IoT sensor networks.

At 1604, ETVs cooperate with their peers to evaluate the trust and reputation of their peers using attestation, telemetry collection, antivirus scans, and the like. As another example, an ETV may be scanned for malicious viruses by another ETV on a periodic basis. The results of the scan may indicate that the ETV under test is less trustworthy because of an infection. ETVs build a reputation score based on their assessments.

Attestation frameworks exist, such as one provided by the IETF and described at https://datatracker.ietf.org/doc/draft-ietf rats-architecture/. In such a framework, Attesters report claims to Verifiers who evaluate Evidence (containing those claims) according to Endorsements or reference measurements also containing claims. By comparing the Endorsement claims to Evidence claims the differential determines a delta from expected values. The delta may be understood in the form of a statistical distribution such as a Poisson curve or other distribution that shows a pattern for variance. Telemetry scans can be understood according to a statistical distribution by taking a sample reference telemetry and comparing subsequent samples to the first or a reference. An security scan (e.g., an antivirus scan) can similarly show a statistical distribution by comparing the rate of infection over a time series and observing changes in the rates. Performance monitoring and other 'scans' can be performed and understood similarly.

Other scans may apply to event logs produced by security processors detailing state changes to keys according to a key lifecycle model. Evaluation of the log may result in a determination whether key lifecycle follow an expected course of action. By observing a pattern of action over time, a statistical distribution can be computed as described above.

A combination of multiple distributions can be understood by applying a median, average, or weighted average function to each discrete form to arrive at a compound distribution which may be referred to as an Edge Node 'reputation'. Trust in an edge node is achieved by a Verifier by collecting a series of reputation scores (values) over time to determine if the change in score follows an expected pattern. For example, in a highly static environment, no change in scores may be what is expected. The deviation from no change determines (statistically) the 'trust' the verifier has in the Edge Node or in the cluster or network of edge nodes.

A community of ETVs may share observations about one or more streams of 'reputation' and look for differences from the same Edge Node (being scanned) but by different ETVs. This differential could be an indication of duplicitous behavior on behalf of the scanned node. Duplicity (the degree of difference of behavior as observed by different ETVs about the same Edge Node) is another form of reputation collection that can factor into the overall reputation score.

At 1606, ETVs use a distributed consensus approach to agree on the assessments and scores. As described above, when a majority of ETVs that test a particular ETV agree to the results, the particular ETV's reputation score is increased or decreased based on the majority opinion.

At 1608, a blockchain policy determines a threshold for scoring, where the scoring reflects acceptable ETVs. Threshold is a policy that specifies the expected distribution of scores. For example, no change over a period of time, or change occurring a 0.5% of a standard distribution, etc. The Edge system operators may observe the system in operation for a period of time before settling on a particular curve from which to evaluate deviation. The point of deviation that suggests something is out of the ordinary is the threshold value.

ETVs may contribute their individual scores to the blockchain nodes and using the blockchain consensus algorithm, establish multiple copies of the value such that an attacker must compromise and reverse the consensus in order to supply an attack score.

At 1610, the resultant blockchain of ETVs that are at or above the threshold establishes a reputation score that is consistent for all of the ETVs in the blockchain such that a blockchain can advertise its collective reputation score and be highly confident it is an actual indication of behavior of the nodes in the blockchain. A blockchain of many nodes versus fewer nodes may improves its reputation score under the philosophy that more nodes is safer than fewer nodes. More nodes may provide redundant services, failover, distributed processing, geographical redundancy, or the like.

At 1612, edge nodes (e.g., ETV nodes) may host edge services S = (S1, S2,..., Sn) where the reputation of Sx is determined by the blockchain reputation score. These reputation scores may be advertised or obtained through a directory or other service, for instance.

At 1614, edge orchestrators may then obtain edge node reputation as part of workload schedule planning. SLAs that contain a reputation range that is appropriate for the workload may then be matched up with edge nodes with requisite reputations.

At 1616, the orchestrator schedules workloads to run workload services with ETV nodes that are within the SLA reputation range. Orchestrator may schedule ETV nodes within the same blockchain, or across multiple blockchains. Other performance factors may favor scheduling within the same blockchain community of ETVs.

At 1618, the services in the workload are executed according to SLA execution plan.

At 1620, the ETVs record the execution statistics (resources used, time taken, input/output parameters, states entered/exited, etc.) in an execution log, which may rely on ETV blockchain to ensure the integrity of the execution log. As ETVs provide feedback on reputation scores for the node that performed the workload, the votes, reputation score, telemetry, analysis data, or other information may be stored in a blockchain.

The individual ETVs may record their respective observed reputation scores about individual nodes. They can record compound scores from a plurality of types of scans (telemetry, attestation, key logs, etc.). They can record aggregate scores from a plurality of Edge Nodes, up to an including all Edge Nodes in a blockchain or network. They can also record a series of a scores over a period of time and they can record the result of applying a policy that shows deviation from an expected score over time. All recorded values are integrity protected using the blockchain consensus algorithm. Typically, this requires a majority of nodes to be compromised before false values can be committed to the chain.

At 1622, the workload results are returned to the user (possibly by way of the orchestrator).

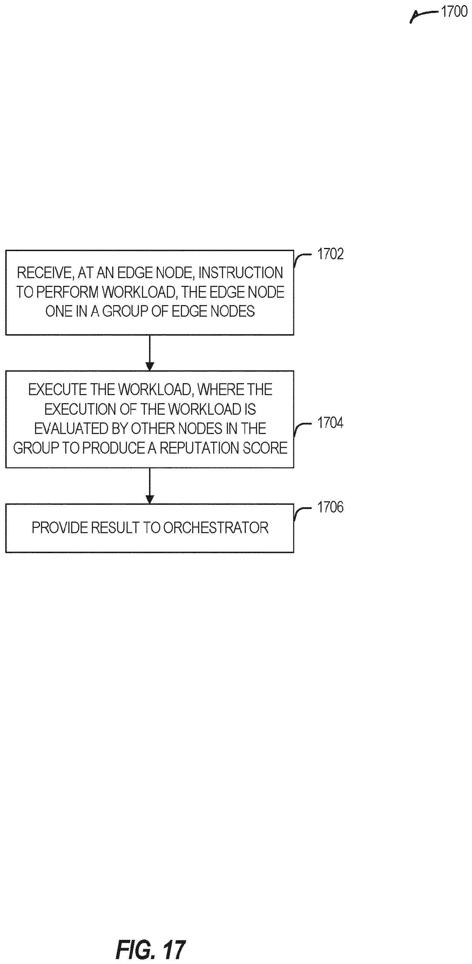

FIG. 17 is a flow chart illustrating a method 1700 for trust-based orchestration in an edge computing environment, according to an embodiment. The method 1700 may be performed by an edge node in an edge cloud, as discussed above in FIG. 1.

At 1702, an edge node in the edge computing environment receives an instruction to perform a workload, the instruction from an edge orchestrator, the edge node being in a group of edge nodes managed with a ledger. In an embodiment, ledger is a blockchain. In an embodiment, the group of edge nodes is associated with a threshold reputation score, where each edge node in the group of edge nodes is required to have at least the threshold reputation score.

In an embodiment, the edge orchestrator selected the edge node based on the reputation score of the edge node. In a further embodiment, the edge orchestrator matched the edge node with a service level agreement that required a minimum reputation score, the edge node reputation score being at least the minimum reputation score.

At 1704, the workload is executed at the edge node to produce a result, wherein the execution of the workload is evaluated by other edge nodes in the group of edge nodes to produce a reputation score of the edge node.

In an embodiment, to produce the reputation of the edge node, the other edge nodes perform attestation on the edge node and based the reputation of the edge node on the attestation. In a further embodiment, the reputation of the edge node is increased when a majority of the other edge nodes agree on the attestation.

In an embodiment, to produce the reputation of the edge node, the other edge nodes collect telemetry on the edge node and the reputation of the edge node is based on the telemetry collected. In a further embodiment, the reputation of the edge node is increased when a majority of the other edge nodes agree on the telemetry collected.

In an embodiment, to produce the reputation of the edge node, the other edge nodes perform security scans on the edge node and based the reputation of the edge node on the antivirus scans. In a further embodiment, the reputation of the edge node is increased when a majority of the other edge nodes agree on the security scans.

At 1706, the result is provided to the edge orchestrator.

In an embodiment, the method 1700 includes evicting the edge node from the group of edge nodes when the reputation score of the edge node is below a threshold. In a further embodiment, the threshold is used as a threshold for all edge nodes in the group of edge nodes.

It should be understood that the functional units or capabilities described in this specification may have been referred to or labeled as components or modules, in order to more particularly emphasize their implementation independence. Such components may be embodied by any number of software or hardware forms. For example, a component or module may be implemented as a hardware circuit comprising custom very-large-scale integration (VLSI) circuits or gate arrays, off-the-shelf semiconductors such as logic chips, transistors, or other discrete components. A component or module may also be implemented in programmable hardware devices such as field programmable gate arrays, programmable array logic, programmable logic devices, or the like. Components or modules may also be implemented in software for execution by various types of processors. An identified component or module of executable code may, for instance, comprise one or more physical or logical blocks of computer instructions, which may, for instance, be organized as an object, procedure, or function. Nevertheless, the executables of an identified component or module need not be physically located together but may comprise disparate instructions stored in different locations which, when joined logically together, comprise the component or module and achieve the stated purpose for the component or module.

Indeed, a component or module of executable code may be a single instruction, or many instructions, and may even be distributed over several different code segments, among different programs, and across several memory devices or processing systems. In particular, some aspects of the described process (such as code rewriting and code analysis) may take place on a different processing system (e.g., in a computer in a data center) than that in which the code is deployed (e.g., in a computer embedded in a sensor or robot). Similarly, operational data may be identified and illustrated herein within components or modules and may be embodied in any suitable form and organized within any suitable type of data structure. The operational data may be collected as a single data set or may be distributed over different locations including over different storage devices, and may exist, at least partially, merely as electronic signals on a system or network. The components or modules may be passive or active, including agents operable to perform desired functions.

## Claims

1. A method (1700) for trust-based orchestration in an edge computing environment, comprising:
sending (1702), by an edge orchestrator (802), to an edge node (804A, 804B) in the edge computing environment, an instruction to perform a workload, the edge node (804A, 804B) being in a group of edge nodes (804A, 804B) managed with a blockchain ledger (BC1, BC2);
executing (1704), by the edge node (804A, 804B), the workload to produce a result, and evaluating, by validator nodes (806A-806J) in the group of edge nodes (804A, 804B), this execution of the workload to produce a reputation score of the edge node (804A, 804B), wherein to produce the reputation of the edge node (804A, 804B), the validator nodes (806A-806J) collect telemetry on the edge node (804A, 804B) and the reputation of the edge node (804A, 804B) is based on the telemetry collected in addition to service level agreement, SLA, or key performance indicator, KPI, parameters, and the telemetry is based on resource utilization of the edge node (804A, 804B); and
providing (1706), by the edge node (804A, 804B), the result to the edge orchestrator (802).

2. The method (1700) of claim 1, wherein to produce the reputation of the edge node (804A, 804B), the validator nodes (806A-806J) perform attestation on the edge node (804A, 804B) and based the reputation of the edge node (804A, 804B) on the attestation.

3. The method (1700) of claim 2, wherein the reputation of the edge node (804A, 804B) is increased when a majority of the validator nodes (806A-806J) agree on the attestation.

4. The method (1700) of claims 1 to 3, wherein the reputation of the edge node (804A, 804B) is increased when a majority of the validator nodes (806A-806J) agree on the telemetry collected.

5. The method (1700) of claim 1, wherein to produce the reputation of the edge node (804A, 804B), the validator nodes (806A-806J) perform security scans on the edge node (804A, 804B) and based the reputation of the edge node (804A, 804B) on the antivirus scans.

6. The method (1700) of claim 5, wherein the reputation of the edge node (804A, 804B) is increased when a majority of the validator nodes (806A-806J) agree on the security scans.

7. The method (1700) of claim 1, wherein the group of edge nodes (804A, 804B) is associated with a threshold reputation score, where each edge node (804A, 804B) in the group of edge nodes (804A, 804B) is required to have at least the threshold reputation score.

8. The method (1700) of claim 1, further comprising:
evicting the edge node (804A, 804B) from the group of edge nodes (804A, 804B) when the reputation score of the edge node is below a threshold.

9. The method (1700) of claim 8, wherein the threshold is used as a threshold for all edge nodes (804A, 804B) in the group of edge nodes (804A, 804B).

10. The method (1700) of claim 1, wherein the edge orchestrator (802) selects, before sending the instruction, the edge node (804A, 804B) based on the reputation score of the edge node (804A, 804B).

11. The method (1700) of claim 10, wherein the edge orchestrator (802) matches, before sending the instruction, the edge node (804A, 804B) with a service level agreement that requires a minimum reputation score, the edge node (804A, 804B) reputation score being at least the minimum reputation score.

12. A machine-readable medium including instructions, which when executed by a machine, cause the machine to perform operations that the edge node (804A, 804B) and validator node (806A-806J) performs in any of the methods (1700) of claims 1-11.

## Patentansprüche

1. Verfahren (1700) zur vertrauensbasierten Orchestrierung in einer Edge-Rechenumgebung, umfassend:
Senden (1702), durch einen Edge-Orchestrator (802), an einen Randknoten (804A, 804B) in der Edge-Rechenumgebung, einer Anweisung zum Durchführen einer Arbeitslast, wobei der Randknoten (804A, 804B) in einer Gruppe von Randknoten (804A, 804B) ist, die mit einem Blockchain-Ledger (BC1, BC2) verwaltet werden;
Ausführen (1704), durch den Randknoten (804A, 804B), der Arbeitslast zum Erzeugen eines Ergebnisses und Auswerten, durch Validatorknoten (806A-806J) in der Gruppe von Randknoten (804A, 804B), dieser Ausführung der Arbeitslast zum Erzeugen eines Zuverlässigkeitswerts des Randknotens (804A, 804B), wobei, zum Erzeugen der Zuverlässigkeit des Randknotens (804A, 804B), die Validatorknoten (806A-806J) Telemetrie an dem Randknoten (804A, 804B) erfassen und die Zuverlässigkeit des Randknotens (804A, 804B) auf der Telemetrie, die zusätzlich zu Parametern einer Dienstebenenvereinbarung, SLA, oder von Schlüsselleistungsindikatoren, KPI, erfasst wird, basiert und die Telemetrie auf einer Ressourcennutzung des Randknotens (804A, 804B) basiert; und
Bereitstellen (1706), durch den Randknoten (804A, 804B), des Ergebnisses an den Edge-Orchestrator (802).

2. Verfahren (1700) nach Anspruch 1, wobei, zum Erzeugen der Zuverlässigkeit des Randknotens (804A, 804B), die Validatorknoten (806A-806J) eine Attestierung an dem Randknoten (804A, 804B) durchführen und die Zuverlässigkeit des Randknotens (804A, 804B) auf der Attestierung basiert haben.

3. Verfahren (1700) nach Anspruch 2, wobei die Zuverlässigkeit des Randknotens (804A, 804B) erhöht wird, wenn ein Großteil der Validatorknoten (806A-806J) bei der Attestierung übereinstimmt.

4. Verfahren (1700) nach einem der Ansprüche 1 bis 3, wobei die Zuverlässigkeit des Randknotens (804A, 804B) erhöht wird, wenn ein Großteil der Validatorknoten (806A-806J) bei der erfassten Telemetrie übereinstimmt.

5. Verfahren (1700) nach Anspruch 1, wobei, zum Erzeugen der Zuverlässigkeit des Randknotens (804A, 804B), die Validatorknoten (806A-806J) Sicherheitsscans an dem Randknoten (804A, 804B) durchführen und die Zuverlässigkeit des Randknotens (804A, 804B) auf den Virenschutzscans basiert haben.

6. Verfahren (1700) nach Anspruch 5, wobei die Zuverlässigkeit des Randknotens (804A, 804B) erhöht wird, wenn ein Großteil der Validatorknoten (806A-806J) bei den Sicherheitsscans übereinstimmt.

7. Verfahren (1700) nach Anspruch 1, wobei die Gruppe von Randknoten (804A, 804B) einem Schwellenzuverlässigkeitswert zugeordnet ist, wobei jeder Randknoten (804A, 804B) in der Gruppe von Randknoten (804A, 804B) mindestens den Schwellenzuverlässigkeitswert aufweisen muss.

8. Verfahren (1700) nach Anspruch 1, ferner umfassend:
Entfernen des Randknotens (804A, 804B) von der Gruppe von Randknoten (804A, 804B), wenn der Zuverlässigkeitswert des Randknotens unterhalb einer Schwelle ist.

9. Verfahren (1700) nach Anspruch 8, wobei die Schwelle als eine Schwelle für alle Randknoten (804A, 804B) in der Gruppe von Randknoten (804A, 804B) verwendet wird.

10. Verfahren (1700) nach Anspruch 1, wobei der Edge-Orchestrator (802), vor dem Senden der Anweisung, den Randknoten (804A, 804B) basierend auf dem Zuverlässigkeitswert des Randknotens (804A, 804B) auswählt.

11. Verfahren (1700) nach Anspruch 10, wobei der Edge-Orchestrator (802), vor dem Senden der Anweisung, den Randknoten (804A, 804B) mit einer Dienstebenenvereinbarung, die einen Mindestzuverlässigkeitswert erfordert, abgleicht, wobei der Zuverlässigkeitswert des Randknotens (804A, 804B) mindestens der Mindestzuverlässigkeitswert ist.

12. Maschinenlesbares Medium, einschließlich Anweisungen, die, wenn sie durch eine Maschine ausgeführt werden, die Maschine zum Durchführen von Vorgängen, die der Randknoten (804A, 804B) und der Validatorknoten (806A-806J) in einem beliebigen der Verfahren (1700) nach einem der Ansprüche 1-11 durchführen, veranlassen.

## Revendications

1. Procédé (1700) d'orchestration basée sur la confiance d'un environnement informatique de périphérie, comprenant :
l'envoi (1702), par un orchestrateur de périphérie (802), à un noeud de périphérie (804A, 804B) de l'environnement informatique de périphérie, d'une instruction pour exécuter une charge de travail, le noeud de périphérie (804A, 804B) faisant partie d'un groupe de noeuds de périphérie (804A, 804B) géré par un registre de chaîne de blocs (BC1, BC2) ;
l'exécution (1704), par le noeud de périphérie (804A, 804B), de la charge de travail pour produire un résultat, et l'évaluation, par des noeuds de validation (806A-806J) du groupe de noeuds de périphérie (804A, 804B), de cette exécution de la charge de travail pour produire un score de réputation du noeud de périphérie (804A, 804B), où, pour produire la réputation du noeud de périphérie (804A, 804B), les noeuds de validation (806A-806J) recueillent des données télémétriques sur le noeud de périphérie (804A, 804B) et la réputation du noeud de périphérie (804A, 804B) est basée sur les données télémétriques recueillies en plus des paramètres d'accord de niveau de service, SLA, ou d'indicateur clé de performance, KPI, et les données télémétriques étant basées sur l'utilisation des ressources par le noeud de périphérie (804A, 804B) ; et
la fourniture (1706), par le noeud de périphérie (804A, 804B), du résultat à l'orchestrateur de périphérie (802).

2. Procédé (1700) selon la revendication 1, dans lequel, pour produire la réputation du noeud de périphérie (804A, 804B), les noeuds de validation (806A-806J) exécutent une attestation sur le noeud de périphérie (804A, 804B) et basent la réputation du noeud de périphérie (804A, 804B) sur l'attestation.

3. Procédé (1700) selon la revendication 2, dans lequel la réputation du noeud de périphérie (804A, 804B) est augmentée lorsqu'une majorité des noeuds de validation (806A-806J) sont d'accord sur l'attestation.

4. Procédé (1700) selon les revendications 1 à 3, dans lequel la réputation du noeud de périphérie (804A, 804B) est augmentée lorsqu'une majorité des noeuds de validation (806A-806J) sont d'accord sur les données télémétriques collectées.

5. Procédé (1700) selon la revendication 1, dans lequel, pour produire la réputation du noeud de périphérie (804A, 804B), les noeuds de validation (806A-806J) exécutent des analyses de sécurité sur le noeud de périphérie (804A, 804B) et basent la réputation du noeud de périphérie (804A, 804B) sur les analyses antivirus.

6. Procédé (1700) selon la revendication 5, dans lequel la réputation du noeud de périphérie (804A, 804B) est augmentée lorsqu'une majorité des noeuds de validation (806A-806J) sont d'accord sur les analyses de sécurité.

7. Procédé (1700) selon la revendication 1, dans lequel le groupe des noeuds de périphérie (804A, 804B) est associé à un score de réputation seuil, chaque noeud de périphérie (804A, 804B) du groupe de noeuds de périphérie (804A, 804B) devant avoir au moins le score de réputation seuil.

8. Procédé (1700) selon la revendication 1, comprenant en outre :
l'éviction du noeud de périphérie (804A, 804B) du groupe de noeuds de périphérie (804A, 804B) lorsque le score de réputation du noeud de périphérie est inférieur à un seuil.

9. Procédé (1700) selon la revendication 8, dans lequel le seuil est utilisé en tant que seuil pour tous les noeuds de périphérie (804A, 804B) du groupe de noeuds de périphérie (804A, 804B).

10. Procédé (1700) selon la revendication 1, dans lequel l'orchestrateur de périphérie (802), avant l'envoi de l'instruction, sélectionne le noeud de périphérie (804A, 804B) sur la base du score de réputation du noeud de périphérie (804A, 804B).

11. Procédé (1700) selon la revendication 10, dans lequel l'orchestrateur de de périphérie (802), avant l'envoi de l'instruction, fait correspondre le noeud de périphérie (804A, 804B) avec un accord de niveau de service qui requière un score de réputation minimal, le score de réputation du noeud de périphérie (804A, 804B) étant au moins le score de réputation minimal.

12. Support lisible par machine incluant des instructions qui, lorsqu'elles sont exécutées par une machine, amènent la machine à exécuter des opérations que le noeud de périphérie (804A, 804B) et le noeud de validation (806A-806J) exécutent dans l'un quelconque des procédés (1700) selon les revendications 1 à 11.
